# EUROPEAN PATENT SPECIFICATION

(11) **EP 2 092 205 B1**
(45) Date of publication and mention of the grant of the patent: **23.06.2010**
(21) Application number: 07852331.3
(22) Date of filing: 19.11.2007
(51) Int. Cl.: F16D 1/033, F16D 1/076

(54) **INTERMEDIATE BEARING AND TRANSMISSION FLANGE WITH OPTIMIZED ABILITY OF PRODUCTION**
ZWISCHENLAGER UND ÜBERTRAGUNGSFLANSCH MIT OPTIMIERTEM PRODUKTIONSVERMÖGEN
PALIER INTERMÉDIAIRE ET FLASQUE DE TRANSMISSION AVEC CAPACITÉ DE PRODUCTION OPTIMISÉE

(30) Priority: 22.11.2006 TR 200606560
(43) Date of publication of application: 26.08.2009
(73) Proprietor: Tirsan Kardan Sanayi Ve Ticaret Anonim Sirketi, 45030 Manisa (TR)
(72) Inventor: UNVER, Nuri, 45030 Manisa (TR)
(74) Representative: Iskender, Ibrahim
(86) International application number: PCT/TR2007/000138
(87) International publication number: WO 2008/063141

(56) References cited:
- FR-A- 1 005 498
- FR-A- 2 165 014
- US-A- 3 001 386
- US-A- 5 676 599

## Description

### TECHNICAL FIELD

The invention relates to the intermediate bearing and transmission flange used in the transmission organs of the motor vehicles providing the motion, moment and power transmission.

Said invention relates to lowering the weight, production rate and costs owing to the modifications made in the geometry of the intermediate bearing and the transmission flange, without the strength values desired at the place of use being altered (even with the same being improved).

### STATE OF THE ART

FR 2 165 014 describes an intermediate bearing and transmission flange according to the preamble of claim 1.

Transmission organs are generally used to generate power from a source and to transmit said generated power from the source to the drive mechanism. For example, in the majority of the land vehicles used at the present, it is the engine/gearbox assembly that generates the cyclic power. This power is transmitted from the engine/gearbox output to the axle input, in order to drive the wheels of the vehicle with the help of the cardan shaft.

The front and rear joints located on the cardan shaft provide the transmission of the cyclic power between the engine/gearbox assembly and the axle, while permitting limited angular and axial motions.

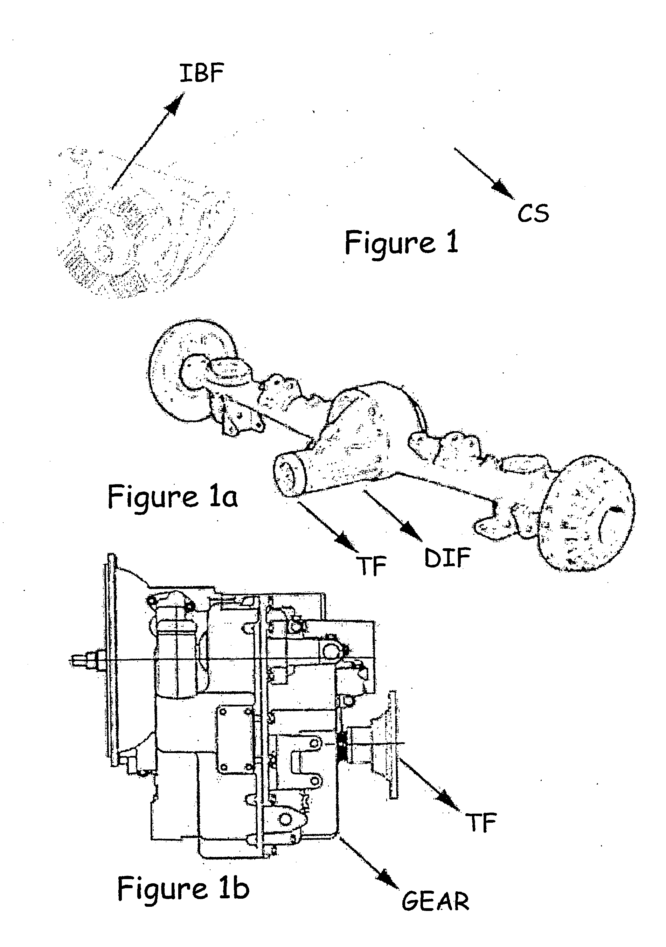

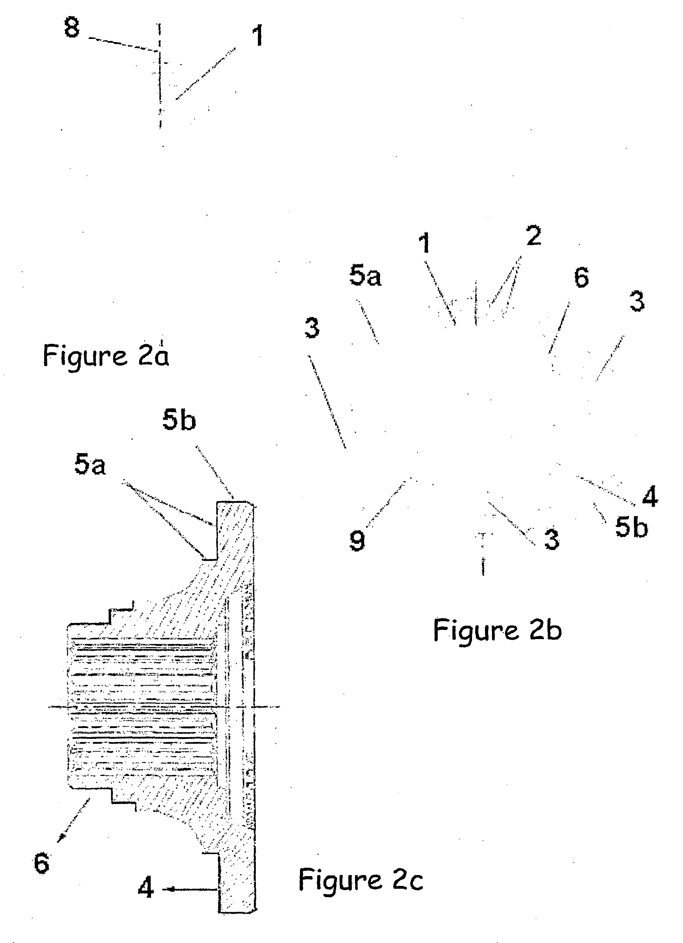

In the transmission organs used today, the intermediate bearing and transmission flange are employed. The part that couples the cardan shafts to one another is called the intermediate bearing flange and the part that couples the cardan shafts with other transmission organs is called transmission flange. Of these parts, which, although being the same component, are referred to as with differing names by virtue of the functions thereof, the intermediate bearing flange is shown in Figure 1 and the transmission flange is shown in Figure 1 a and Figure 2b. Figures 2a, 2b and 2c illustrate in detail the raw and the post-processing forms of the intermediate bearing and transmission flange.
Disadvantages of the present product:
- Heavy weight of the raw part,
- removing more filings from the part,
- extended processing time,
- increased tool kit consumption for use in processing, due to the extensive surface area to be processed,
- increased use of coolant liquid due to the removal of more filings from the part and adverse effect of the coolant liquid on the environment,
- high unit costs per part.

### THE SOLUTIONS PROVIDED BY THE INVENTION FOR THE PROBLEMS OF THE PRIOR ART

The invention aims at eliminating the aforesaid shortcomings. According to the invention, changes are applied on the intermediate bearing and transmission flange geometry and the addition of feder is carried out.

Owing to performed feder addition and the geometric changes;
- the weight is reduced of the raw material and the finished part,
- less filings are removed from the flange diameter and bolt-nut seating surfaces, in order to reduce the processing surface area on the part,
- with a protrusion designed in the flange diameter, only the protrusion section is processed instead of the whole flange diameter; hence processing is reduced and the consumption is reduced for the tool kit used for processing,
- processing time is shortened,
- less coolant liquid is used and thus its adverse effect is diminished on the environment, owing to the removal of less filings from the part and the shortened processing time,
- consequently, the unit cost per part is lowered.

In order to achieve said objects an intermediate bearing and transmission flange according to claim 1 are used.

=Further exemplary embodiments are disclosed in the dependent claims.

The invention will be better understood from an examination of the appended drawings, taking also into consideration the brief descriptions and the reference numerals provided in connection with the same.

### BRIEF DESCRIPTION OF THE FIGURES

Figure 1 is a perspective view showing the complete cardan shaft (CS), being one of the transmission organs, and the intermediate bearing flange (IBF).
Figure 1a is a perspective view showing the transmission flange (TF) mounted on the differential (DIF), being one of the transmission organs.
Figure 1b is a perspective view showing the transmission flange (TF) mounted on the gearbox (GEAR), being one of the transmission organs.
Figure 2a is a perspective view showing the raw (unprocessed) form of the part from which the intermediate bearing and transmission flange according to the state of the art are obtained.
Figure 2b is a perspective view showing the finished (processed) form of the part from which the intermediate bearing and transmission flange according to the state of the art are obtained.
Figure 2c is a cross-section where the surfaces processed on the intermediate bearing and transmission flange according to the state of the art shown in Figure 2b are marked.
Figure 3a is a perspective view showing the raw (unprocessed) form of the part from which the intermediate bearing and transmission flange according to the invention are obtained.
Figure 3b is a perspective view showing the finished (processed) form of the part from which the intermediate bearing and transmission flange according to the invention are obtained.
Figure 3c is a cross-section where the surfaces processed on the intermediate bearing and transmission flange according to the invention shown in Figure 3b are marked.
Figure 4a is a perspective view showing the processed sections on the outer diameter according to the state of the art.
Figure 4b is a perspective view showing the processed sections on the outer diameter belonging to the intermediate bearing and transmission flange according to the invention.
Figure 4c is a perspective view showing the processed sections on the bolt-nut seating surfaces according to the state of the art.
Figure 4d is a perspective view showing the processed sections on the bolt-nut seating surfaces in the intermediate bearing and transmission flange according to the invention.
Figure 4e is a top view wherein the processed sections on the outer diameter according to the state of the art are marked with broken lines.
Figure 4f is a top view wherein the processed sections on the outer diameter in the intermediate bearing and transmission flange according to the invention are marked with broken lines.

**REFERENCE NUMBERS**

| **No.** | **Part or Section name** |
|---|---|
| **1** | Center hole |
| **2** | Teeth |
| **3** | Connection holes |
| **4** | Bolt-nut seating surface |
| **5a** | First processing surface (bolt-nut seating surface of the present flange) |
| **5b** | First processing surface (outer diameter of the present flange) |
| **5a'** | First processing surface (bolt-nut seating surface of flange according to |
| **5b'** | First processing surface (outer diameter of the flange according to the |
| **6** | Second processing surface (processing surface of the present flange) |
| **6'** | Second processing surface (processing surface of flange according to |
| **7** | Discharge |
| **8** | Flange axis |
| **9** | Zone remaining between the connection holes |
| **10** | Feder |
| **11** | Protrusion |
| **D** | Outer diameter |
| **IBF** | Intermediate bearing flange |
| **TF** | Transmission flange |
| **IBTF** | Intermediate bearing and transmission flange |
| **CS** | Cardan shaft |
| **DIF** | Differential |
| **GEAR.** | Gearbox |

### DETAILED DESCRIPTION OF AN EXEMPLARY EMBODIMENT OF THE INVENTION

An exemplary embodiment of the invention will be better understood when explained with reference to aforementioned figures and reference numbers.

In Figure 2a, the unprocessed raw form of the intermediate bearing and transmission flange (IBTF) used in the transmission organs according to the state of the art is shown in perspective. Intermediate bearing and transmission flange (IBTF) is obtained by processing a cylindrical form with various diameters, by means of the method of removing the filings from some surfaces (5a, 5b, 6) thereof. A cavity resulting from the raw part on the flange axis (8) is in the form of hole (1) spline and the teeth (2) are made on inner recess of said hole (1). Motion, moment and power transmission is carried out via said teeth (2) (see Figure 2b, 2c).

Figure 2c is a cross-section where the surfaces (5a, 5b, 6) processed on the intermediate bearing and transmission flange (IBTF) according to the state of the art shown in Figure 2b are marked.

The processing is carried out through two zones on the intermediate bearing and transmission flange (IBTF). These are the first processing surface (5a, 5b) and the second processing surface (6). On the first processing surface (5a, 5b), the connection holes (3) and the bolt-nut seating surfaces are processed. On the second processing surface (6), the seating surfaces are processed of the parts such as powder sheet, seal, etc. In embodiments according to the prior art, since the first and the second processing surfaces (5a, 5b and 6) are in cylindrical form, especially the distance (9) remaining between the connection holes (3) located at certain intervals on the bolt-nut seating surface (4) is processed.

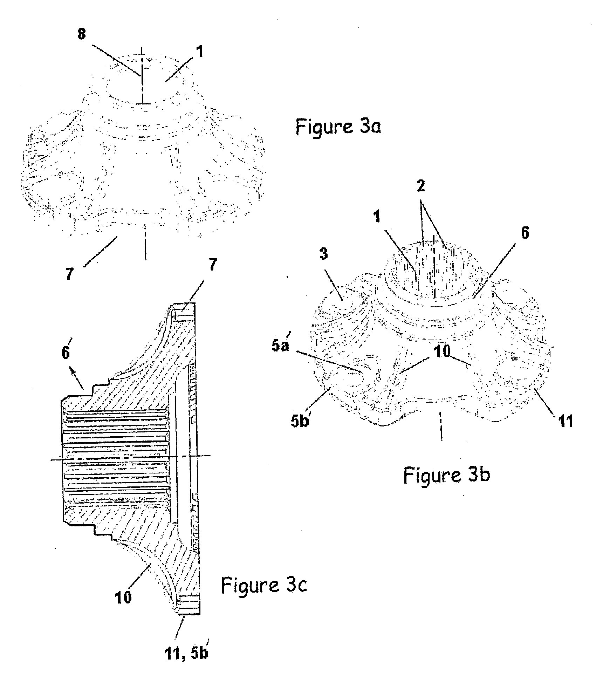

Figure 3a, Figure 3b and Figure 3c are the perspective and sectional views, where the raw (unprocessed), finished (processed) and in-process surfaces (5a', 5b', 6') of the part from which the intermediate bearing and transmission flange (IBTF) according to the invention are obtained are marked.

On said part, the geometric changes are implemented on especially the first processing surfaces (5a', 5b'). Discharges (7) are made on the zones (9) remaining between the connection holes (3). Said discharges (7) start at the outer diameter (D) or at a point close to said diameter, and are directed towards the axis of the flange (8). Feders (10) are formed, which extend from the starting and ending sections of said discharges (7) on the outer diameter (D) towards the starting point of the second processing surface (6') (see Figure 3b).

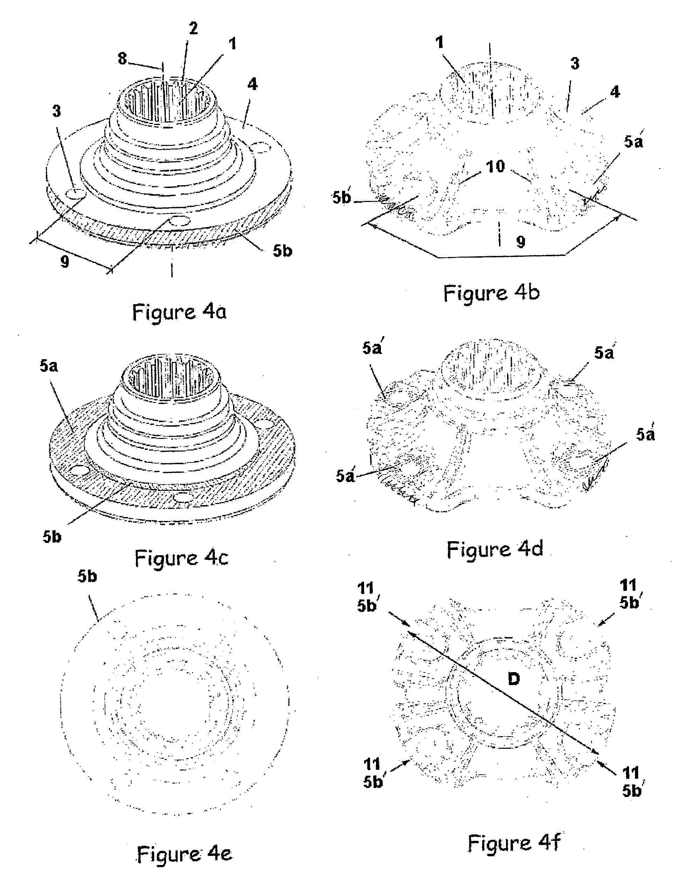

With the change made on the side of the first processing surfaces (5a', 5b'), there exists no surface to be processed in the discharges (7) remaining between the connection holes (3). Only an area (5a') sufficient for the seating surfaces of the connecting elements is processed (see Figure 4b and 4d).

The first processing surface (5b') used to obtain the outer diameter measurement (D) is obtained with the protrusion (11) form.

When the pairs of Figure 4a-Figure 4b, Figure 4c-Figure 4d and Figure 4e-Figure 4f are examined, the difference will be clearly noticed between the first processing surfaces (5a and 5b) that belong to the intermediate bearing and transmission flange (IBTF) needed to be processed according to the state of the art, and the first processing surfaces (5a' and 5b') that belong to the intermediate bearing and transmission flange (IBTF) according to the invention.

## Claims

1. An intermediate bearing and transmission flange for transmission organs, comprising a center hole (1) and teeth (2) formed on inner recess of said center hole (1) providing motion, moment and power transmission, the intermediate bearing and transmission flange being connectable to its place of use by means of connection holes (3) opened on sections close to an outer diameter (D) of the intermediate bearing and transmission flange and of connecting elements passing through said connection holes (3), **characterized in that** a non-continuous first processing surface (5b') on said outer diameter (D) used to obtain the outer diameter (D) measurement is obtained with a protrusion (11) form.

2. An intermediate bearing and transmission flange according to claim 1, **characterized in that** it comprises discharges (7), which start at said outer diameter (D) or at a point close to said diameter (D) and is directed towards the axis (8) of the intermediate bearing and transmission flange.

3. An intermediate bearing and transmission flange according to claim 1, **characterized in that**, non-processed zones (9) are provided, which remain between the connection holes (3) and do not continuously progress on a seating surface (4) of the connection holes (3) opened for performing the function of positioning said connecting elements and carrying out the function of connection.

4. An intermediate bearing and transmission flange according to claim 1, **characterized in that** it comprises feders (10) that extend along the outer surface of the intermediate bearing and transmission flange, from the outer diameter (D) or a point close to said diameter to the starting point of a second processing surface (6').

## Patentansprüche

1. Ein Zwischenlager und Antriebsflansch (IBTF) in Antriebs Elementen, das ein mittel Loch (1), ein Zahn (2) das in einer inneren Aussparung dem genannten mittel Loch (1) ausgebildet ist und für Bewegung-, Moment- und Leistungsübertragung sorgt, offene Verbindungslöcher (3) die dem Außendurchmesser (D) nahe sind und mittels Verbindungsstücke die durch den genannten Löchern (3) verlaufen an ihrer Stelle verbunden sind, **dadurch gekennzeichnet, dass** es diskontunierliche erste Prozessfläche (5b), für die Messung des Außendurchmessers (D) als Ausbuchtungen (11) ausgebildet sind, für die Reduzierung der Fläche die den Außendurchmesser (D) formt.

2. Ein Zwischenlager und Antriebsflansch (IBTF) nach Anspruch 1, **dadurch gekennzeichnet**; das es Abläufe (7), die am Außendurchmesser (D) oder an einem nahen Punkt des Außendurchmessers anfängt und zu der Achse der Flansch (8) verläuft, aufweist.

3. Ein Zwischenlager und Antriebsflansch (IBTF) nach Anspruch 1, **dadurch gekennzeichnet; dass** es unverarbeitete Bereiche (9) ausgebildet sind, die zwischen den Verbindungslöchern (3) bleiben und über dem Rand der ersten Verarbeitungsflächen (5a', 5b') diskontunierlich nicht verlaufen.

4. Ein Zwischenlager und Antriebsflansch (IBTF) nach Anspruch 1, **dadurch gekennzeichnet**; das es vom Außendurchmesser (D) oder einem Punkt nahe dem Außendurchmesser zu dem Anfangspunkt der zweiten Verarbeitungsfläche (6') über der Außenfläche des Zwischenlagers und Antriebsflansches (IBTF) verlaufende Zuführungen (10) aufweist.

## Revendications

1. Flanche de transmission et pieu intermédiaire (IBTF) dans les organes de transmission comprenant des trous de connexion ouvert (3) se liant par l'intermédiaire des pièces de connexion passant dans les trous dudit (3) et dont la dent (2) constituée sur sa cavité intérieure proche au diamètre extérieur (D) du trou central (1) dudit assurant un trou central (1), mouvement, moment et une transmission de puissance, **caractérisé en ce qu'**il comprend une surface de premier traitement non continu (5b') formée en saillie (11) afin d'assurer la mesure du diamètre extérieur (D) pour diminuer la surface traitant le diamètre extérieur (D) lorsqu'il est traité.

2. Un pieu intermédiaire et flanche de transmission selon la revendication 1 (IBTF), **caractérisé en ce qu'**il; comprend des décharges (7) dirigées vers l'axe de la flanche (8) et commençant dans un point proche du diamètre extérieur dudit ou dans le diamètre extérieur dudit (D).

3. Un pieu intermédiaire et flanche de transmission selon la revendication 1 (IBTF), **caractérisé en ce qu'**il; assure des zones non procédées (9) qui n'avancent pas progressivement sur le bord des surfaces de premier traitement (5a', 5b') et restant entre les trous de connexion (3).

4. Un pieu intermédiaire et flanche de transmission selon la revendication 1 (IBTF), **caractérisé en ce qu'**il; comprend des alimentateurs (10) prolongés le long de la surface extérieure de la flanche de transmission et du pieu intermédiaire (IBTF) du diamètre extérieur (D) ou d'un point proche au diamètre dudit ou au point de commencement de la surface du deuxième traitement (6').
